# EUROPÄISCHE PATENTANMELDUNG

(11) **EP 0 575 747 A1**
(43) Veröffentlichungstag der Anmeldung: **29.12.1993**
(21) Anmeldenummer: 93108074.1
(22) Anmeldetag: 18.05.1993
(51) Int. Cl.: F16L 5/02, A62C 3/16

(54) **Sperreinrichtung gegen Rauchdurchtritt bei einer Vorrichtung zur Durchführung von Leitungen durch eine Wand**

(30) Priorität: 23.06.1992 DE 4220449
(71) Anmelder: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(57) **Zusammenfassung**

In der Öffnung einer zwei Brandabschnitte voneinander trennenden Wand (2) ist zur Durchführung von Leitungen (1) eiun Schottkasten (4) angeordnet, der eine die Leitungen (1) aufnehmende Durchführungsöffnung (5) bildet, in der erst im Brandfall Brandschutz- und/oder Löschmittel (40) wirksam werden, und der zum Abschließen der Durchführungsöffnung (5) auf beiden Seiten der Wand mit einer beweglichen Klasse (8) versehen ist sowie von beidseits der Wand (2) angeordneten Rauchmeldern (9) gesteuerte Halteeinrichtungen aufweist, die die Klappen (8) in der Schließstellung festhalten können. Weiter ist der Schottkasten (4) mit einem unbrennbaren Gasmedium versorgt, das eine Strömung an jeder Mündung der Durchführungsöffnung (5) nach außen erzeugen kann. Es sind ferner Einrichtungen zum Rückstellen der Klappen (8) in die Schließstellung vorgesehen und die Steuerung der Halteeinrichtung ist so ausgebildet, daß bei Rauch in einem der Brandabschnitte die Klappen (8) ind der Schließstellung festgehalten werden.

## Beschreibung

Die Erfindung betrifft eine Sperreinrichtung gegen Rauchdurchtritt bei einer Vorrichtung zur Durchführung von Leitungen, wie Kabel, Rohre oder dergl., durch eine Öffnung in einer zwei Brandabschnitte voneinander trennenden Wand, wobei die Vorrichtung zur Durchführung der Leitungen einen abgedichtet gegen die Wand in der Wandöffnung angeordneten Schottkasten aufweist, der eine auf beiden Seiten der Wand mündende, die Leitungen aufnehmende Durchführungsöffnung bildet, in der erst im Brandfall Brandschutz- und/oder Löschmittel wirksam werden, und der zum Abschließen der Durchführungsöffnung an deren Mündung auf beiden Seiten der Wand mit einem beweglichen Sperrglied versehen ist sowie von in den Brandabschnitten beidseits der Wand angeordneten Rauchmeldern gesteuerte Halteeinrichtungen aufweist, die das Sperrglied in der Schließstellung festhalten können, und wobei Mittel vorgesehen sind, die den Schottkasten mit einem unbrennbaren Gasmedium versorgen und eine Strömung dieses Gasmediums an jeder Mündung der Durchführungsöffnung nach außen erzeugen können.

Eine derartige Sperreinrichtung ist in der zum nicht vorveröffentlichten Stand der Technik gehörenden deutschen Patentanmeldung P 41 31 153.1 beschrieben. Bei dieser Sperreinrichtung sind die Halteeinrichtungen so gesteuert, daß bei Rauch in einem der beiden Brandabschnitte sich das auf dessen Seite der Wand befindliche Sperrglied öffnet, so daß eine aus dem Schottkasten durch die geöffnete Mündung der Durchführungsöffnung hindurch nach außen gerichtete Strömung des Gasmediums entsteht, die das Eindringen von Rauch, Flammen, Konvektionswärme und dergl. in den Schottkasten hinein verhindert. Im einfachsten Fall besteht das Gasmedium aus Luft, kann aber auch flammenerstickende Eigenschaften besitzen, wie insbes. Stickstoff oder Kohlendyoxid. Nachteilig hierbei ist, daß durch die Öffnung des Sperrglieds der Austrittsquerschnitt der Gasströmung an der Mündung der Durchführungsöffnung verhältnismäßig groß ist und daher die Aufrechterhaltung der Gasströmung entsprechend große Gasmengen erfordert. Die Mündung der Durchführungsöffnung selbst zu verkleinern, verbietet sich, da dann kein ausreichender Platz mehr vorhanden wäre, Änderungen oder Ergänzungen in der Leitungsbelegung der Durchführungsöffnung problemlos auszuführen.

Der Erfindung liegt die Aufgabe zugrunde, eine Sperreinrichtung der eingangs genannten Art so auszubilden, daß die Erzeugung der auswärts gerichteten Gasströmung möglichst wenig Gas erfordert, bzw. mit einer gegebenen Menge an Gas die Gasströmung möglichst lange aufrecht erhalten werden kann.

Diese Aufgabe wird bei einer Sperreinrichtung mit den eingangs genannten Merkmalen nach der Erfindung dadurch gelöst, daß Einrichtungen zum Rückstellen der Sperrglieder in die Schließstellung vorgesehen sind und die Steuerung der Halteeinrichtung so ausgebildet ist, daß bei Rauch in einem der Brandabschnitte die Sperrglieder an beiden Mündungen der Durchführungsöffnung in der Schließstellung festgehalten werden.

Dadurch wird erreicht, daß die Sperrglieder normalerweise immer in der Schließstellung stehen und die Schließstellung auch zuverlässig immer wieder einnehmen, wenn sie, etwa im Zusammenhang mit die Leitungsverlegung in der Durchführungsöffnung betreffenden Arbeiten, geöffnet worden sein sollten. Tritt dann in einem der Brandabschnitte Rauch auf, werden die Sperrglieder an beiden Mündungen in der Schließstellung festgehalten, so daß die entstehende Gasströmung nicht mehr den gesamten Mündungsquerschnitt der Durchführungsöffnung zu erfüllen braucht, sondern nur noch den lichten Querschnitt zwischen den Leitungen und dem ihnen gegenüber liegenden Rand der Sperrglieder. Dieser Querschnitt ist wesentlich geringer als der volle Mündungsquerschnitt der Durchführungsöffnung, so daß die Gasströmung an beiden Mündungen mit entsprechend kleinerem Gasverbrauch erzeugt und aufrecht erhalten werden kann. Die Sperrglieder können sich im übrigen auch dann nicht mehr öffnen, wenn im weiteren Verlauf des Brandgeschehens die Brandschutz- und/oder Löschmittel in der Durchführungsöffnung wirksam werden. Insbes. bleiben dadurch die Brandschutzmittel auf das Innere des Schottkastens beschränkt, so daß z. B. durch im Schottkasten befindliches Intumeszenzmaterial, das unter Wärmeeinwirkung sein ursprüngliches Volumen stark vergrößert, der Schottkasten und die Durchführungsöffnung zuverlässig gefüllt und verschlossen werden. Die Sperrglieder selbst können dabei zum Brandschutz beitragen, wenn sie ihrerseits entsprechend gegen Wärme und Feuer widerstandsfähig sind, vorzugsweise aus einem Werkstoff auf der Basis von Calciumsilikat bestehen. Die Sperrglieder können sogar ihrerseits Intumeszenzmaterial enthalten, das im Brandfall aus den in der Schließstellung festgehaltenen Sperrgliedern in die Durchführungsöffnung austritt.

In bevorzugter Ausführungsform sind die Sperrglieder als Klappen ausgebildet, die mit horizontaler Schwenkachse oberhalb der jeweiligen Mündung der Durchführungsöffnung gelagert sind. Dann können die Klappen in der Durchführungsöffnung nach innen und außen pendeln und so bei Arbeiten an den Leitungen die Durchführungsöffnung ohne weiteres freigeben, sei es, daß vorhandene Leitungen heraus- oder neue Leitungen eingezogen werden sollen. Immer aber kehren die Klappen selbsttätig in die Schließstellung zurück, in der sie beim Eintreten eines Brandfalls nur noch festgehalten zu werden brauchen. Schon die-Schwerkraft bewirkt die Rückstellung der Klappen in die Schließstellung. Jedoch empfiehlt es sich, für eine zuverlässige Rückstellung der Klappen größere Rückstellkräfte wirksam werden zu lassen. Eine im Rahmen der Erfindung bevorzugte Einrichtung zum Rückstellen der Klappen in die Schließstellung besitzt daher je eine Steuerkulisse und eine Rückstellfeder, die beim Verschwenken der Klappe aus der Schließstellung heraus über die Steuerkulisse zunehmend gespannt wird, im Ergebnis also einen Kraftspeicher für die Klappenrückstellung bildet. In konstruktiv besonders einfacher und daher bevorzugter Weise kann dies dadurch verwirklicht werden, daß die Klappenlager außer Schwenkungen auch Verschiebungen der Klappe parallel zu sich selbst und quer zur Klappenschwenkachse ermöglichen, wobei die Klappe in Verschiebungsrichtung gegen die Rückstellfeder abgestützt ist. Durch die Verschiebung der Klappe beim Öffnen wird die Rückstellfeder gespannt. Vorzugsweise sind die Klappenlager von am Schottkasten festen Lagerzapfen und in den Klappen vorgesehenen Lagerschlitzen gebildet, in die die Lagerzapfen vorstehen, wobei die Rückstellfedern zwischen den Lagerzapfen und den den Leitungen abgewandten Enden der Lagerschlitze angeordnet und die Klappen mit ihrem auf derselben Seite liegenden Klappenrand an den Steuerkulissen abgestützt sind. Die Steuerkulisse kann dabei auf sehr einfache und zweckmäßige Weise dadurch verwirklicht werden, daß die Klappen mit ihrem oberen Rand je in eine in der Schottkastenwand ausgebildete Nut greifen, die im Querschnitt ausgerundet ist und deren Seitenflächen die Steuerkulisse bilden, an der die Klappe mit am Klappenrand entsprechend gerundeten Randflächen zur Anlage kommt.

Die Halteeinrichtungen zum Festhalten der Klappen in der Schließstellung bestehen vorzugweise aus aufblasbaren Blähkörpern, die zum Festhalten der Klappen aufgebläht werden und sich im Spalt zwischen der Schottkastenwand und der Klappe verspannen. Zweckmäßigerweise sind die Blähkörper an der Schottkastenwand befestigt und am Rand der Klappen Ausnehmungen vorgesehen, in welche die Blähkörper im aufgeblähten Zustand formschlüssig eingreifen. Durch ihre Befestigung an der Schottkastenwand statt an den Klappen können die Blähkörper einfacher mit dem ihr Aufblähen bewirkenden Druckmedium versorgt werden, wozu sie vorzugsweise mit einer das Druckmedium einspeisenden Druckquelle über Ventile verbunden sind, die durch die Rauchmelder steuerbar sind. Das Druckmedium, in der Regel Druckluft, kann dem Schottkasten von außen über eine Druckgasleitung zugeführt werden. Besser, einfacher und betriebssicherer aber ist es, die Druckquelle unmittelbar im Schottkasten in Form von Druckgas-Speicherbehältern und die Rauchmelder außen am Schottkasten anzuordnen. Die elektrische Versorgung der Rauchmelder und der Ventile kann dann durch im Schottkasten installierte Batterien oder Akkus erfolgen.

Nach einem weiteren, besonders vorteilhaften Vorschlag der Erfindung sind die Blähkörper als sich durchgehend längs des Spaltes zwischen der Klappe und der Schottkastenwand erstreckende Blähschläuche ausgebildet. Im aufgeblähten Zustand ergeben dann die Blähschläuche eine Abdichtung des gesamten Spaltes zwischen der Klappe und der Schottkastenwandung, was weiter zur Verringerung des Gasverbrauchs für die auswärts gerichtete Gasströmung beiträgt. Ragt die Klappe mit ihrem oberen Rand in schon beschriebener Weise in eine mit den Seitenwänden die Steuerkulisse bildende Nut in der Schottkastenwand, so empfiehlt es sich, den als Blähschlauch ausgebildeten Blähkörper in der Scheitellinie der den oberen Klappenrand aufnehmenden Nut in den Nutgrund einzusenken. Soweit dabei die Klappe im übrigen in der ebenfalls schon beschriebenen Weise verschiebbar ist, kann das Aufblähen der Blähkörper, insbes. der Blähschläuche, auch ein Verschieben der Klappe gegen die Leitungen bewirken, wodurch im Brandfall auch der sonst noch vorhandene Freiraum zwichen dem unteren Klappenrand und den in der Durchführungsöffnung verlaufenden Leitungen weiter geschlossen werden kann, was wiederum zur Verringerung des Gasverbrauchs für die auswärts gerichtete Gasströmung vorteilhaft ist. Diese zusätzliche Abdichtung der Klappen gegen die Leitungen erweist sich dann als besonders wirksam, wenn gemäß einem weiteren Vorschlag der Erfindung die Klappen an ihrem den Leitungen zugekehrten Rand sich zwischen die Leitungen legende Fransen tragen, die zweckmäßigerweise aus Kupferdraht bestehen und dann nicht nur zusätzlich abdichtend, sondern auch in hohem Maße flammenhemmend wirken.

Wird das zur Erzeugung der nach außen gerichteten Gasströmung dienende Gas zunächst in den Schottkasten selbst geleitet, um dann von da an den Mündungen der Durchführungsöffnung auszutreten, können die dadurch innerhalb des Schottkastens selbst entstehenden Gasströmungen und Gasturbulenzen die Wirkung der Brandschutz- und/oder Löschmittel im Schottkasten im weiteren Verlauf des Brandgeschehens störend beeinflussen, beispielsweise die vollständige und dichte Verfüllung des Schottkastens und der Durchführungsöffnung mit in der Brandhitze aufgehendem Intumeszenzmaterial behindern. In weiterer Ausbildung der Erfindung kann diese Gefahr dadurch vermieden werden, daß zur Erzeugung der auswärts gerichteten Gasströmung an jeder Mündung der Durchführungsöffnung das jeweilige Sperrglied ein mit dem Gasmedium gespeistes Kanalsystem aufweist, das an dem den Leitungen zugewandten Rand des Sperrglieds auf dessen Außenseite eine sich längs des Randes erstreckende Reihe von Kanalmündungen für den Gasaustritt bildet, wobei die austretenden Gasstrahlen schräg nach unten und außen gegen die Leitungen gerichtet sind und gemeinsam außen vor dem geschlossenen Sperrglied die auswärts gerichtete Gasströmung bilden. Vorzugsweise sind bei zum Festhalten der Sperrglieder in der Schließstellung vorgesehenen Blähkörpern diese und das Kanalsystem für die Gasströmung an denselben Druckgas-Speicherbehälter innerhalb des Schottkastens angeschlossen, wobei der Anschluß des Kanalsystems durch im Schottkasteninneren verlaufende flexible Druckgasleitungen erfolgt. Im Ergebnis wird erreicht, daß das die nach außen gerichtete Strömung erzeugende Gas in der Durchführungsöffnung selbst und im Schottkasten überhaupt nicht mehr wirksam werden, also dort auch die Wirkung der Brandschutz- und/oder Löschmittel nicht mehr beeinträchtigen kann.

Im folgenden wird die Erfindung an einem in der Zeichnung dargestellten Ausführungsbeispiel näher erläutert; es zeigen:
- Fig. 1: eine Stirnansicht einer Vorrichtung zur Brandabschottung gemäß der Erfindung,

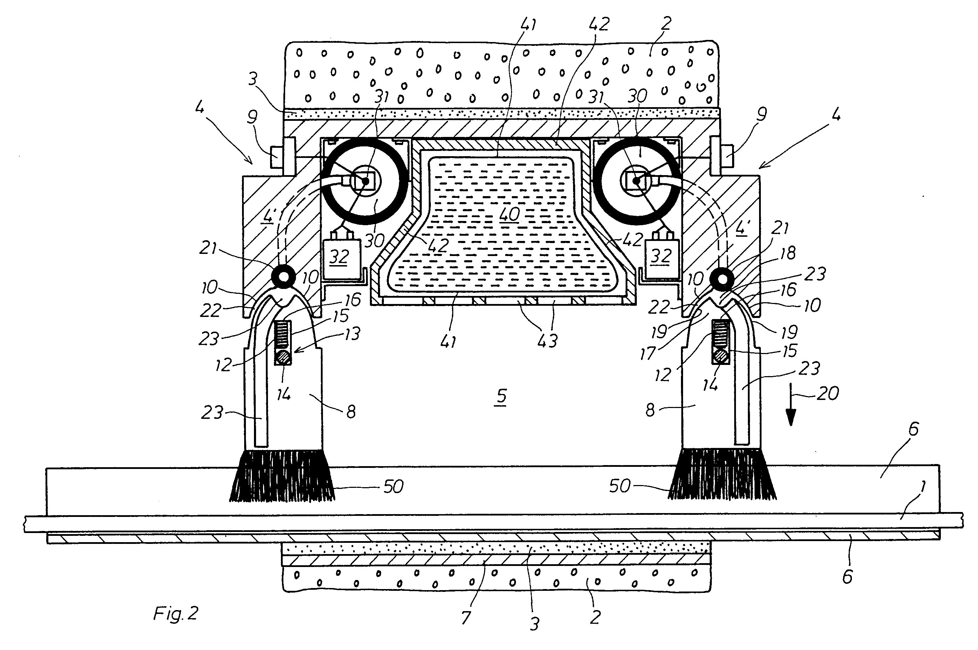

- Fig. 2: den Schnitt II-II durch den Gegenstand der Fig. 1,

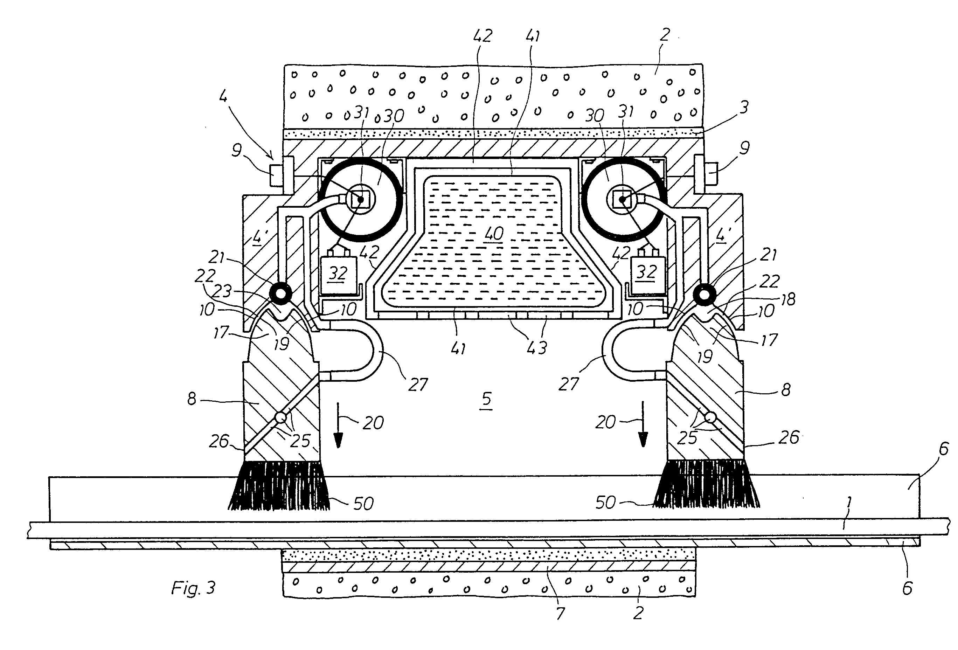

- Fig. 3: den Schnitt III-III durch den Gegenstand der Fig. 1,

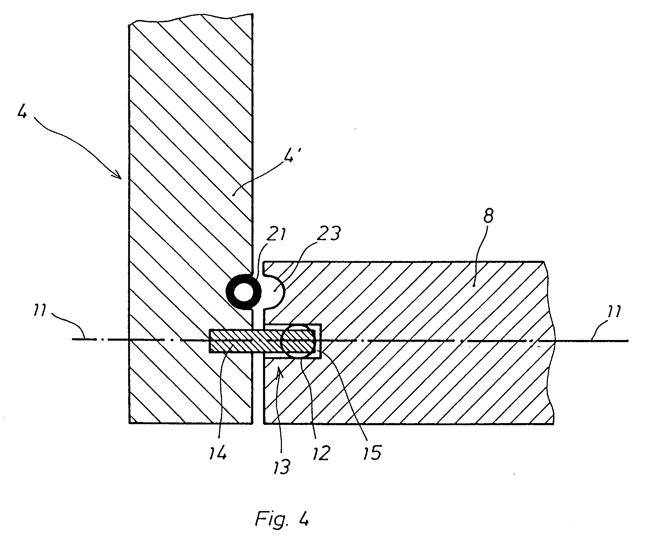

- Fig. 4: den Schnitt IV-IV in Fig. 1.

Die in der Zeichnung dargestellte Vorrichtung dient zur Brandabschottung einer Wandöffnung für die Durchführung von in den Figuren lediglich an einem einzigen Beispiel dargestellten Leitungen 1, wie Kabel oder Rohre, durch eine Wand 2 und besitzt einen durch Brandschutzschaum 3 abgedichtet gegen die Wand 2 in der Wandöffnung angeordneten Schottkasten 4, der eine auf beide Seiten der Wand 2 mündende, die Leitungen 1 aufnehmende Durchführungsöffnung 5 bildet. Die Leitungen 1 liegen auf einer die Durchführungsöffnung 5 durchsetzenden Leitungspritsche 6. Der Schottkasten 4 ruht über den Brandschutzschaum 3 auf einer Verstärkungsplatte 7 aus unbrennbarem Material. In der Durchführungsöffnung 5 werden erst im Brandfall Brandschutz- und/oder Löschmittel wirksam, so daß die Durchführungsöffnung 5 normalerweise für Arbeiten zur Änderung oder Ergänzung der Leitungsbelegung offen und zugänglich ist. Der Schottkasten 4 besitzt auf beiden Seiten der Wand 2 zum Abdecken der Mündungen der Durchführungsöffnung 5 vorgesehene Klappen 8, die am Schottkasten 4 im Randbereich der Mündungen der Durchführungsöffnung 5 schwenkbar gelagert sind. Die Klappen 8 können für Belegungsarbeiten nach innen in den Schottkasten hinein oder nach außen geöffnet werden, stellen sich aber immer selbsttätig wieder in die die jeweilige Mündung abdeckende Schließstellung zurück, werden aber beim Eintreten eines Brandfalles in dieser Schließstellung festgehalten. Die zu letzterem dienenden, noch näher zu beschreibenden Halteeinrichtungen werden von beidseits der Wand 2 am Schottkasten 4 angeordneten Brand- und/oder Rauchmeldern 9 gesteuert. Außerdem besteht die Möglichkeit, an jeder Mündung der Durchführungsöffnung 5 eine nach außen gerichtete Strömung eines unbrennbaren Gasmediums zu erzeugen, die zu Beginn eines Brandfalles, wenn die Brandschutz- und/oder Löschmittel in der Durchführungsöffnung 4 noch nicht wirksam geworden ist, das Eindringen von Rauch in den Schottkasten 4 verhindert und somit eine Sperreinrichtung gegen Rauchdurchtritt bildet.

Die Klappen 8 sind mit horizontaler Schwenkachse 11 oberhalb der jeweiligen Mündung der Durchführungsöffnung 5 gelagert. Zum Rückstellen der Klappen 8 in die Schließstellung dienen außer der Schwerkraft Steuerkulissen 10 und zwischen den Steuerkulissen 10 einerseits und der Schwenkachse 11 andererseits wirkende Rückstellfedern 12, die beim Verschwenken der Klappen 8 aus der Schließstellung heraus mit Hilfe der Steuerkulissen 10 zunehmend gespannt werden und dadurch jeweils einen Kraftspeicher für die Rückstellung der Klappen 8 bilden. Die Klappenlager 13 ermöglichen außer Schwenkungen auch Verschiebungen der Klappen 8 parallel zu sich selbst und quer zur Klappenschwenkachse, wobei die Klappen 8 in Verschiebungsrichtung gegen die Rückstellfedern 12 abgestützt sind. Die Klappenlager 13 sind von am Schottkasten 4 festen Lagerzapfen 14 und in den Klappen 8 vorgesehenen Lagerschlitzen 15 gebildet, in die die Lagerzapfen 14 vorstehen. Die Rückstellfedern 12 sind zwischen den Lagerzapfen 14 und den den Leitungen abgewandten Enden 16 der Lagerschlitze 15 angeordnet. Die Klappen 8 können sich mit ihrem auf derselben Seite liegenden, also oberen Klappenrand 17 an den Steuerkulissen 10 abgestützen. Dabei greifen die Klappen 8 mit ihrem oberen Rand 17 je in eine in der Schottkastenwand ausgebildete Nut 18, die im Querschnitt ausgerundet ist und deren Seitenflächen die Steuerkulissen 10 bilden, an der die Klappe 8 mit am Klappenrand entsprechend gerundeten Randflächen 19 beim Schwenken zur Anlage kommt. Durch den ellyptischen Nut- bzw. Randquerschnitt wird erreicht, daß die Klappen 8 beim Verschwenken aus der Schließstellung in Richtung des Pfeiles 20 gegen die Leitungen 1 vorgeschoben werden und sich dabei die Rückstellfedern 12 spannen, die dann anschließend die Klappen 8 über die Steuerkulissen 10 wieder in die Schließstellung zurückdrücken.

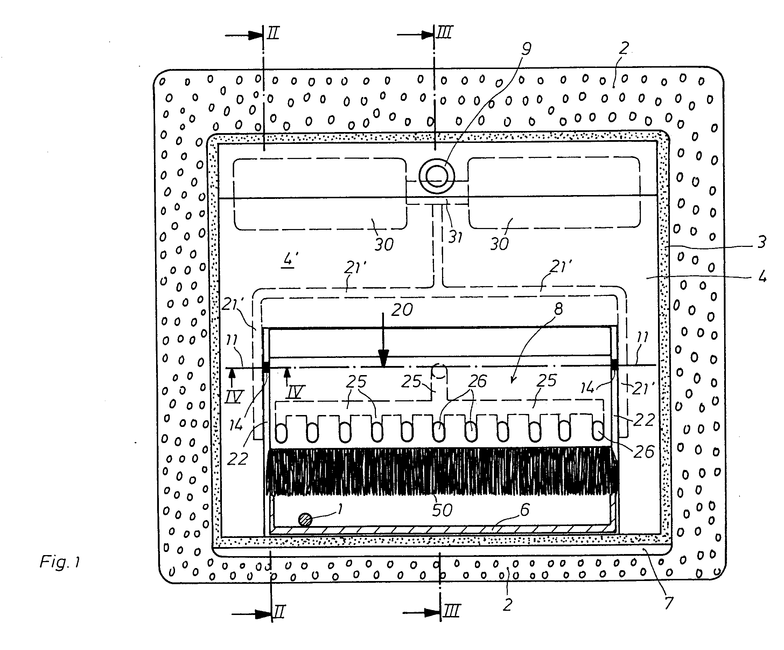

Die Einrichtungen zum Festhalten der Klappen 8 in der Schließstellung bestehen aus aufblasbaren Blähkörpern 21 aus hoch dehnungsfähigem Neopren. Die Blähkörper 21 werden zum Festhalten der Klappen mit Druckluft aufgebläht und verspannen sich dann im Spalt 22 zwischen der Schottkastenwand 4' und der Klappe. Die Blähkörper 21 sind an der Schottkastenwand 4' befestigt, nehmen also an der Klappenbewegung selbst nicht teil und können daher in einfacher Weise an die Druckluftversorgung angeschlossen werden. Am Rand der Klappen 8 sind Ausnehmungen 23 vorgesehen, in welche die Blähkörper 21 im aufgeblähten Zustand formschlüssig eingreifen. Die Blähkörper 21 sind als Blähschläuche ausgebildet, die sich durchgehend längs der Spalte 22 zwischen der Klappe 8 und der Schottkastenwand 4' erstrecken und daher im aufgeblähten Zustand die Klappe 8 gegen die Schottkastenwand 4' über jeweils die gesamte Spaltlänge abdichten, was in Fig. 1 gestrichelt bei 21' angedeutet ist. In der Scheitellinie der den oberen Klappenrand 17 aufnehmenden Nut 18 ist der Blähkörper 21 in den Nutgrund eingesenkt, so daß er im nicht aufgeblähten Zustand die Klappenbewegung nicht behindert.

Zur Erzeugung der auswärts gerichteten Gasströmung an jeder Mündung der Durchführungsöffnung 5 besitzt die jeweilige Klappe 8 ein mit dem Gasmedium für die Gasströmung gespeistes Kanalsystem 25. Dieses Kanalsystem 25 bildet im Bereich des den Leitungen 1 zugewandten Klappenrands auf der Klappenaußenseite eine sich längs des Klappenrands erstreckende Reihe von Kanalmündungen 26 für den Gasaustritt. Die aus den Mündungen 26 austretenden Gasstrahlen sind schräg nach unten und außen gegen die Leitungen 1 gerichtet und bilden gemeinsam außen vor der geschlossenen Klappe 8 die auswärts gerichtete Gasströmung. Die Versorgung dieses Kanalsystems 25 mit dem Gasmedium erfolgt durch im Schottkasteninneren verlaufende flexible Druckgasleitungen 27, so daß das Gasmedium im Inneren des Schottkastens 4 und innerhalb der Durchführungsöffnung 5 selbst nicht zur Wirkung kommen kann.

Die Blähkörper 21 und das Kanalsystem 25 sind mit einer Druckgasquelle 30 über Ventile 31 verbunden, die durch die Brand- und/oder Rauchmelder 9 gesteuert werden. Die Druckgasquelle 30 besteht aus mehreren im Schottkasten 4 angeordneten Druckgas-Speicherbehältern, in der Regel Druckluftbehältern. Spricht einer der Melder 9 an, öffnen sich die Ventile, so daß sich die Blähkörper 21 aufblähen und gleichzeitig die Gasströmung an den Kanalmündungen 26 bildet. Die elektrische Versorgung der Rauchmelder 9 und der Ventile 31 erfolgt durch im Schottkasten 4 angedeutete Batterien oder Akkus 32.

Im Ausführungsbeispiel sind innerhalb des Schottkastens 4 lediglich Brandschutzmittel 40 in Form eines Intumeszenzmaterials enthalten, das in der Hitzewirkung des Brandes sein Volumen vervielfacht und dadurch die Durchführungsöffnung 5 und den Schottkasten 4 verfüllt und verschließt. Dieses Brandschutzmittel 40 befindete sich in einem PE-Kunststoffbeutel 41 innerhalb eines im Schottkasten 4 angeordneten Behälters 42, dessen Wand nach unten zur Durchführungsöffnung 5 hin Öffnungen 43 aufweist, so daß das Brandschutzmittel 40 durch diese Öffnungen 43 hindurch in die Durchführungsöffnung 5 gelangt, wenn in der Brandhitze der das Brandschutzmittel 40 einschließende Beutel 41 zu schmelzen beginnt.

Die Klappen 8 tragen an ihrem den Leitungen 1 zugewandten Rand sich zwischen die Leitungen legende Fransen 50 aus Kupferdraht.

## Patentansprüche

1. Sperreinrichtung gegen Rauchdurchtritt bei einer Vorrichtung zur Durchführung von Leitungen (1), wie Kabel, Rohre oder dergl., durch eine Öffnung in einer zwei Brandabschnitte voneinander trennenden Wand (2), wobei die Vorrichtung zur Durchführung der Leitungen (1) einen abgedichtet gegen die Wand (2) in der Wandöffnung angeordneten Schottkasten (4) aufweist, der eine auf beiden Seiten der Wand (2) mündende, die Leitungen (1) aufnehmende Durchführungsöffnung (5) bildet, in der erst im Brandfall Brandschutz- und/oder Löschmittel (40) wirksam werden, und der zum Abschließen der Durchführungsöffnung (5) an deren Mündung auf beiden Seiten der Wand mit einem beweglichen Sperrglied versehen ist sowie von in den Brandabschnitten beidseits der Wand (2) angeordneten Rauchmeldern (9) gesteuerte Halteeinrichtungen aufweist, die das Sperrglied in der Schließstellung festhalten können, und wobei Mittel vorgesehen sind, die den Schottkasten (4) mit einem unbrennbaren Gasmedium versorgen und eine Strömung dieses Gasmediums an jeder Mündung der Durchführungsöffnung (5) nach außen erzeugen können, dadurch gekennzeichnet, daß Einrichtungen zum Rückstellen der Sperrglieder in die Schließstellung vorgesehen sind und die Steuerung der Halteeinrichtung so ausgebildet ist, daß bei Rauch in einem der Brandabschnitte die Sperrglieder an beiden Mündungen der Durchführungsöffnung (5) in der Schließstellung festgehalten werden.

2. Sperreinrichtung nach Anspruch 1, dadurch gekennzeichnet, daß die Sperrglieder als Klappen (8) ausgebildet sind, die mit horizontaler Schwenkachse (11) oberhalb der jeweiligen Mündung der Durchführungsöffnung (5) gelagert sind.

3. Sperreinrichtung nach den Ansprüchen 1 und 2, dadurch gekennzeichnet, daß die Einrichtungen zum Rückstellen der Sperrglieder bzw. Klappen (8) in die Schließstellung (10) je eine Steuerkulisse (10) und eine Rückstellfeder (12) aufweisen, die beim Verschwenken der Klappe (8) aus der Schließstellung heraus über die Steuerkulisse (10) zunehmend gespannt wird.

4. Sperreinrichtung nach Anspruch 3, dadurch gekennzeichnet, daß die Klappenlager (13) außer Schwenkungen auch Verschiebungen der Klappe (8) parallel zu sich selbst und quer zur Klappenschwenkachse (11) ermöglichen, wobei die Klappe (8) in Verschiebungsrichtung gegen die Rückstellfeder (12) abgestützt ist.

5. Sperreinrichtung nach Anspruch 4, dadurch gekennzeichnet, daß die Klappenlager (13) von am Schottkasten (4) festen Lagerzapfen (14) und in den Klappen (8) vorgesehenen Lagerschlitzen (15) gebildet sind, in die die Lagerzapfen (14) vorstehen, wobei die Rückstellfedern (12) zwischen den Lagerzapfen (14) und den den Leitungen (1) abgewandten Enden (16) der Lagerschlitze (15) angeordnet und die Klappen (8) mit ihrem auf derselben Seite liegenden Klappenrand (17) an den Steuerkulissen (10) abgestützt sind.

6. Sperreinrichtung nach Anspruch 4 oder 5, dadurch gekennzeichnet, daß die Klappen (8) mit ihrem oberen Rand (17) je in eine in der Schottkastenwand (4') ausgebildete Nut (18) greifen, die im Querschnitt ausgerundet ist und deren Seitenflächen die Steuerkulisse (10) bilden, an der die Klappe (8) mit am Klappenrand (17) entsprechend gerundeten Randflächen (19) zur Anlage kommt.

7. Sperreinrichtung nach einem der Ansprüche 2 bis 6, dadurch gekennzeichnet, daß die Halteeinrichtungen zum Festhalten der Klappen (8) in der Schließstellung aus aufblasbaren Blähkörpern (21) bestehen, die zum Festhalten der Klappen (8) aufgebläht werden und sich im Spalt (22) zwischen der Schottkastenwand (4') und der Klappe (8) verspannen.

8. Sperreinrichtung nach Anspruch 7, dadurch gekennzeichnet, daß die Blähkörper (21) an der Schottkastenwand (4') befestigt und am Rand der Klappen (8) Ausnehmungen (23) vorgesehen sind, in welche die Blähkörper (21) im aufgeblähten Zustand formschlüssig eingreifen.

9. Sperreinrichtung nach Anspruch 7 oder 8, dadurch gekennzeichnet, daß die Blähkörper (21) als sich durchgehend längs des Spaltes (22) zwischen der Klappe (8) und der Schottkastenwand (4') erstreckende Blähschläuche ausgebildet sind.

10. Sperreinrichtung nach den Ansprüchen 6, 8 und 9, dadurch gekennzeichnet, daß der als Blähschlauch ausgebildete Blähkörper (21) in der Scheitellinie der den oberen Klappenrand (17) aufnehmenden Nut (18) in den Nutgrund eingesenkt ist.

11. Sperreinrichtung nach einem der Ansprüche 7 bis 10, dadurch gekennzeichnet, daß die Blähkörper (21) mit einer ihr Aufblähen bewirkenden Druckquelle (30) über Ventile (31) verbunden sind, die durch die Rauchmelder (8) steuerbar sind.

12. Sperreinrichtung nach Anspruch 11, dadurch gekennzeichnet, daß die Druckquelle (30) von im Schottkasten (4) angeordneten Druckgas-Speicherbehältern gebildet ist und die Rauchmelder (9) außen am Schottkasten angeordnet sind.

13. Sperreinrichtung nach einem der Ansprüche 2 bis 12, dadurch gekennzeichnet, daß die Klappen (8) aus einem Werkstoff auf der Basis von Calciumsilikat bestehen.

14. Sperreinrichtung nach einem der Ansprüche 2 bis 13, dadurch gekennzeichnet, daß die Klappen (8) an ihrem den Leitungen (1) zugekehrten Rand sich zwischen die Leitungen legende Fransen (50) tragen.

15. Sperreinrichtung nach Anspruch 14, dadurch gekennzeichnet, daß die Fransen (50) aus Kupferdraht bestehen.

16. Sperreinrichtung nach einem der Ansprüche 1 bis 15, dadurch gekennzeichnet, daß zur Erzeugung der auswärts gerichteten Gasströmung an jeder Mündung der Durchführungsöffnung (5) das jeweilige Sperrglied ein mit dem Gasmedium gespeistes Kanalsystem (25) aufweist, das an dem den Leitungen (1) zugewandten Rand des Sperrgliedes auf dessen Außenseite eine sich längs des Randes erstreckende Reihe von Kanalmündungen (26) für den Gasaustritt bildet, wobei die austretenden Gasstrahlen schräg nach unten und außen gegen die Leitungen (1) gerichtet sind und gemeinsam außen vor dem geschlossenen Sperrglied die auswärts gerichtete Gasströmung bilden.

17. Sperreinrichtung nach Anspruch 16, dadurch gekennzeichnet, daß bei zum Festhalten der Sperrglieder in der Schließstellung vorgesehenen Blähkörpern (21) diese und das Kanalsystem (25) für die Gasströmung an denselben Druckgas-Speicherbehälter (30) innerhalb des Schottkastens (4) angeschlossen sind, wobei der Anschluß des Kanalsystems (25) durch im Schottkasteninneren verlaufende flexible Druckgasleitungen (27) erfolgt.
